(19) Europäisches Patentamt
European Patent Office
Office européen des brevets

(11) Numéro de publication : **0 043 297**
**B1**

(12) # FASCICULE DE BREVET EUROPÉEN

(45) Date de publication du fascicule du brevet : **29.02.84**

(51) Int. Cl.³ : **C 08 F 2/38**, C 08 F 8/00, C 08 F 20/00, C 11 D 1/02

(21) Numéro de dépôt : **81400839.7**

(22) Date de dépôt : **26.05.81**

(54) **Cotélomères hydrophiles à terminaison sulfonate contenant des fonctions acide et amine et leur application dans des compositions détergentes.**

(30) Priorité : **25.06.80 FR 8014061**

(43) Date de publication de la demande : **06.01.82 Bulletin 82/01**

(45) Mention de la délivrance du brevet : **29.02.84 Bulletin 84/09**

(84) Etats contractants désignés : **AT BE CH DE FR GB IT LI LU NL SE**

(56) Documents cités :
**DE-A- 1 800 373**
**FR-A- 2 306 999**
**FR-A- 2 318 830**
**JOURNAL OF POLYMER SCIENCE, vol. 17, no. 4, Avril 1979 H. TANAKA: "Hofmann Reaction of polyacrylamide: relationship between reaction condition and degree of polymerization of polyvinylamine", pages 1239-1245**

(73) Titulaire : **Société Chimique des Charbonnages Tour Aurore Place des Reflets Cédex no 5 F-92080 Paris La Défense 2 (FR)**

(72) Inventeur : **Couderc, Pierre 78, rue Emile Zola F-62400 Béthune (FR)**

**EP 0 043 297 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

Cotélomères hydrophiles à terminaison sulfonate contenant des fonctions acide et amine et leur application dans des compositions détergentes

La présente invention concerne des cotélomères hydrophiles à terminaison sulfonate contenant des fonctions acide et amine et leur application dans des compositions détergentes.

Les oligomères à terminaison sulfonate de l'acide acrylique et de l'acrylamide sont connus par le brevet français n° 1 584 934.

Le brevet français n° 2 306 999 décrit un procédé pour le réarrangement de Hofmann de polymères d'amides α,β-insaturés par halogénoamidation desdits polymères au moyen d'un hypohalogénite en milieu alcalin aqueux, suivie de la réaction de réarrangement de l'halogénoamide résultant. Ce procédé est appliqué à des produits de poids moléculaires moyens supérieurs à 5 000 et ne comportant pas de terminaison sulfonate. Si la réaction de réarrangement est partielle et effectuée à température trop élevée, les polymères obtenus peuvent contenir simultanément des fonctions acide carboxylique, amide et amine.

Un premier objet de la présente invention consiste en des cotélomères hydrophiles à terminaison sulfonate de formule générale :

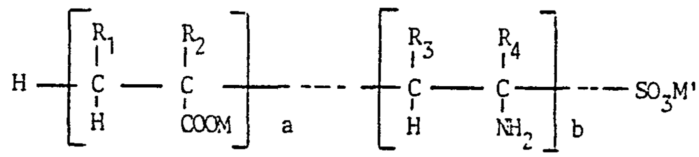

dans laquelle $R_1$, $R_2$, $R_3$ et $R_4$, qui sont identiques ou différents, représentent des atomes d'hydrogène ou bien des groupes alkyles ayant de 1 à 4 atomes de carbone, M est l'hydrogène ou un métal alcalin, M' est un métal alcalin, $8 \leq a \leq 40$ et $1 \leq b \leq 20$.

Les valeurs des indices a et b sont déterminées d'après les teneurs en soufre et en azote. Le dosage des fonctions amine est effectué suivant la méthode décrite dans le brevet français n° 2 306 999.

Les cotélomères selon l'invention contiennent par exemple des motifs acide acrylique (ou acrylate de métal alcalin) et vinylamine. Ces cotélomères sont très solubles dans l'eau.

Ils peuvent en outre comporter des motifs

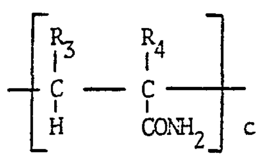

dans lesquels $R_3$ et $R_4$, identiques ou différents, représentent des atomes d'hydrogène ou des groupes alkyles ayant de 1 à 4 atomes de carbone, $0 < c \leq 2$, et, le cas échéant, des motifs

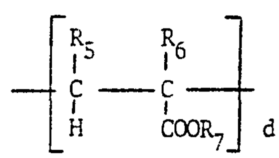

dans lesquels $R_5$ et $R_6$, identiques ou différents, représentent des atomes d'hydrogène ou des groupes alkyles ayant de 1 à 4 atomes de carbone, $R_7$ représente un groupe alkyle ayant de 1 à 8 atomes de carbone, $0 < d \leq 3$ et/ou des motifs

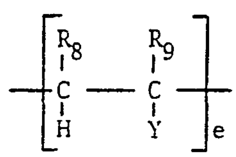

dans lesquels $R_8$ et $R_9$, identiques ou différents, représentent des atomes d'hydrogène ou des groupes alkyles ayant 1 ou 2 atomes de carbone, Y représente un groupe aryle tel que phényle, phényle substitué, naphtyle, $0 < e \leq 2$, et/ou des motifs

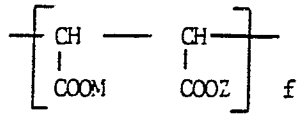

dans lesquels M représente l'hydrogène ou un métal alcalin, Z représente M ou bien un groupe alkyle ayant de 1 à 8 atomes de carbone, $0 < f \leq 10$.

La masse moléculaire moyenne en poids Mw des cotélomères selon l'invention est, par exemple, comprise entre 700 et 4 800.

Le procédé de préparation des cotélomères hydrophiles selon l'invention consiste :

a) dans une première étape, à cotélomériser en solution aqueuse un acide de formule $R_1CH = CR_2—COOH$ ou l'un de ses sels alcalins et un amide $R_3CH = CR_4—CONH_2$ dans un rapport molaire acide/amide compris entre 0,5 et 40, en présence, le cas échéant, d'un ester de formule $R_5CH = CR_6—COOR_7$ et/ou d'un hydrocarbure aromatique à chaîne latérale insaturée de formule $R_8CH = CR_9Y$ et/ou d'un composé de formule $MOOC—CH = CH—COOZ$ ($R_1$, $R_2$, $R_3$, $R_4$, $R_5$, $R_6$, $R_7$, $R_8$, $R_9$, Y et Z ayant des significations données ci-dessus) en présence de sulfite acide de métal alcalin et d'un initiateur de télomérisation, à une température comprise entre 0 et 100 °C, puis le cas échéant à neutraliser le produit obtenu à l'aide d'un hydroxyde de métal alcalin, et

b) dans une deuxième étape à soumettre le produit neutralisé à l'action d'une solution aqueuse d'hypohalogénite de métal alcalin, en une quantité telle que le rapport molaire hypohalogénite de métal alcalin/fonctions amide, soit compris entre 0,9 et 1,25, à une température comprise entre − 10 et + 10 °C, et en présence d'un hydroxyde de métal alcalin en quantité telle que le rapport molaire hydroxyde de métal alcalin/hypohalogénite de métal alcalin, soit compris entre 1,8 et 2.

La première étape est mise en œuvre comme décrit dans le brevet français n° 1 584 934. La masse moléculaire moyenne du cotélomère obtenu est modulée par l'utilisation d'une quantité plus ou moins importante de sulfite acide de métal alcalin, limiteur de chaîne. Le milieu réactionnel ne contenant plus de monomères libres est, le cas échéant, traité par une base forte de façon à salifier les fonctions acide présentes.

La deuxième étape du procédé, connue sous le nom de « dégradation de Hofmann » est mise en œuvre comme décrit dans le brevet français n° 2 306 999.

Les cotélomères formés sont séparés du milieu réactionnel de la façon suivante.

Deux modes de séparation peuvent être envisagés selon que l'on peut utiliser le produit brut de la réaction ou bien que l'on souhaite séparer le cotélomère à l'état pur. On s'est en effet aperçu que dans l'application des cotélomères selon l'invention à la préparation de poudres détergentes, dans lesquelles ils jouent le rôle d'agent complexant, ces cotélomères peuvent être utilisés même s'ils sont mélangés aux sous-produits formés lors de la réaction de dégradation d'Hofmann ($Na_2CO_3$ et NaCl). Il est également possible d'utiliser la solution aqueuse obtenue après la deuxième étape en y ajoutant tout ingrédient nécessaire à l'obtention d'un détergent liquide.

La séparation des produits contenus en solution peut être obtenue par simple évaporation de l'eau, par exemple dans un appareil rotatif, à une température inférieure à 80 °C et de préférence sous pression réduite (1 à 20 mm, 1,3-27 mbar de mercure).

Si l'on désire obtenir le cotélomère à l'état pur, donc débarrassé des sels minéraux qui l'accompagnent (et en particulier du chlorure de sodium) on procède selon une méthode qui consiste à précipiter le cotélomère dans du méthanol à température ambiante en agitant avec du méthanol puis décantant à plusieurs reprises et successivement, le mélange réactionnel obtenu après dégradation d'Hofmann. On obtient ainsi le cotélomère sous forme cristalline en suspension dans du méthanol ; le cotélomère est ensuite filtré puis séché, de préférence sous pression réduite.

Un second objet de la présente invention est l'application des cotélomères hydrophiles à terminaison sulfonate à la préparation de compositions détergentes.

On a en effet constaté que ces cotélomères possèdent un pouvoir complexant élevé vis-à-vis des ions calcium et magnésium. On a, de plus, constaté, après préparation de poudres détergentes, que ces cotélomères possèdent aussi un bon pouvoir détergent et un pouvoir anti-redéposition des salissures lors du lavage du linge. Ils conviennent donc à la préparation de poudres détergentes dans lesquelles ils peuvent remplacer le tripolyphosphate de sodium couramment utilisé.

Ainsi les poudres détergentes que l'on peut préparer contiennent :

— de 10 à 50 % en poids de cotélomères selon l'invention, ces cotélomères pouvant être, comme décrit ci-dessus, soit purs, soit accompagnés des sous-produits minéraux formés lors de la réaction de dégradation d'Hofmann ; dans ce dernier cas on réalise donc déjà, à ce stade, un apport de $Na_2CO_3$,

— de 1 à 30 % en poids d'un agent de blanchiment choisi parmi les peroxydes minéraux tels que le percarbonate de sodium, le perborate de sodium et parmi les compositions d'hydroperoxydes de mono- ou polyalkylarylsulfonates de métal alcalin (tels qu'ils sont décrits dans la demande de brevet européen n° 5 098 pour leur préparation et leur application) ou bien des mélanges de ces agents de blanchiment ; les compositions d'hydroperoxydes de mono- ou polyalkylarylsulfonates de métal alcalin peuvent, préalablement à leur utilisation, avoir été traitées par de l'eau oxygénée en vue d'accroître leur pouvoir blanchissant, comme décrit dans la demande de brevet européen n° 28 186,

— enfin les ingrédients bien connus de l'homme de l'art comme

— de 5 à 80 % en poids d'un surfactif comprenant un ou plusieurs détergents anioniques, le plus souvent du type alkyl ou arylsulfonate de sodium, par exemple le dodécylbenzène sulfonate de sodium, et/ou un ou plusieurs savons comme le sel de sodium de suif, et/ou un ou plusieurs détergents non ioniques, tels que des dérivés polyoxyéthylénés ou polyoxypropylénés d'alcools ou de glycols,

— de 1 à 10 % en poids de silicate de sodium,

— de 0,01 à 1 % en poids de parfums, colorants, azurants optiques,

— le complément à 100 % en poids, s'il y a lieu, sous forme de une ou plusieurs charges minérales comme le sulfate de sodium, le carbonate de sodium ou leurs mélanges.

Le pouvoir détergent et anti-redéposition des cotélomères selon l'invention est particulièrement élevé vis-à-vis des taches de sang, de cacao et de la salissure complexe BMI (sang/lait/encre).

Les exemples non limitatifs suivants ont pour but d'illustrer l'invention.

Exemples 1 à 8

Préparation de cotélomères selon l'invention

Dans un réacteur de 2 litres muni d'une agitation et de moyens de chauffage et de refroidissement régulés on met en place de l'eau, et les monomères. On introduit alors en 30 mn du bisulfite de sodium sous la forme d'une solution aqueuse à 35 % en poids, en maintenant la température à 15-20 °C. Dans ce mélange bien agité et maintenu à la même température on introduit une solution aqueuse de persulfate d'ammonium à 10 % en poids, à la vitesse de 0,5 $cm^3$/heure, cependant 6 à 8 heures. On porte alors le mélange à ébullition pendant une heure et on le refroidit à température ambiante. On neutralise ensuite les fonctions acides du cotélomère formé à l'aide d'une solution aqueuse de soude caustique à 28 % en poids, avec la quantité théoriquement nécessaire par rapport aux fonctions acides présentes. On refroidit le milieu réactionnel à 0 °C et le maintient à cette température pendant que l'on introduit une solution d'hypochlorite de sodium à 48 degrés chlorométriques et une solution de soude caustique à 22 % en poids. Au bout d'une heure on laisse la température monter naturellement à l'ambiante et on maintient l'ambiante pendant une heure.

Le tableau I décrit pour chaque cotélomère préparé les quantités de réactifs utilisées.

Le produit de la réaction est alors récupéré et purifié de la façon suivante : on ajoute à 100 parties du milieu réactionnel, sous agitation et à température ambiante, 80 parties de méthanol. Après un temps de contact d'environ 5 minutes, on arrête l'agitation et on laisse reposer. Il se forme 2 couches, la couche inférieure étant constituée de 56 à 57 parties d'un produit huileux. Ce produit est repris, sous agitation par 40 parties de méthanol à 0 °C et on laisse à nouveau décanter. On répète cette opération 3 fois et on obtient une suspension dans le méthanol d'un produit finement divisé que l'on filtre et sèche sous le vide de la trompe à eau dans un dessiccateur.

La formule de chaque cotélomère ainsi obtenu est déterminée par les analyses suivantes :

— teneur pondérale en soufre

— masse moléculaire moyenne en poids calculée d'après la teneur en soufre.

— teneur pondérale en azote.

Les indices a à f figurant au tableau II sont ceux de la formule générale ci-dessus. Les motifs acides sont sous la forme de sels de sodium.

D'autre part on a mesuré le pouvoir complexant exprimé en mg d'ions calcium par gramme de cotélomère, par dosage à pH 10 d'une solution d'ions $Ca^{++}$ par une solution de cotélomère en présence d'une électrode spécifique des ions $Ca^{++}$.

Exemples 9 à 27

Application des cotélomères à la préparation de poudres détergentes.

L'efficacité des poudres détergentes contenant des cotélomères selon l'un des exemples 1 à 5 a été appréciée par trois séries de tests :

— la mesure du pouvoir anti-redéposition,

— la mesure du pouvoir détergent,

— la mesure du pouvoir détergent en présence d'un tissu éponge en coton blanc.

Pour estimer le pouvoir anti-redéposition, on lave dix fois de suite un tissu-éponge en coton blanc en présence d'un échantillon de salissure témoin, cet échantillon étant renouvelé à chaque lessive.

Pour estimer le pouvoir détergent, on lave ensemble plusieurs échantillons (généralement 3 ou 4) de salissures-témoin de nature différente.

Les compositions détergentes sont préparées comme il est décrit dans la demande de brevet européen n° 5 098. On utilise 600 ml d'eau et 1,2 g de poudre détergente dans le cas d'essais anti-redéposition, ou 6 g de poudre détergente dans le cas d'essais de détergence.

Les lavages sont effectués sur des échantillons de tissus imprégnés des salissures artificielles suivantes et fournis par le laboratoire fédéral d'essais des matériaux (St Gollen, Suisse) : sang, vin rouge, noir immédial (teinture au noir au soufre), cacao, BMI (sang — lait — encre de chine), 101 (noir de carbone + graisse) qui seront appelées respectivement ci-dessous : sang, vin, noir, cacao, BMI, 101.

Le tissu-éponge en coton blanc nécessaire aux tests anti-redéposition est un tissu courant du commerce.

Le pouvoir anti-redéposition et le pouvoir détergent sont mesurés à l'aide du système de chromaticité uniforme L, a, b, « cube root » (1958) décrit dans la demande de brevet européen n° 5 098. L est la luminance exprimée en %. ΔE est l'écart de chromaticité absolue entre le point représentant l'échantillon et le point correspondant à la blancheur pure théorique maximale (L = 100, a = b = 0).

Les poudres détergentes utilisées ont la composition pondérale suivante :

| | |
|---|---|
| Dodécylbenzènesulfonate de sodium à environ 50 % de matière active | 10 % |
| Sel de sodium de suif | 7 % |
| Détergent non ionique | 6 % |
| Silicate de sodium à environ 44 % de matière active | 10 % |
| Perborate de sodium à 4 $H_2O$ | 25 % |
| Cotélomère selon l'invention | voir tableaux III et IV |
| Sulfate et/ou carbonate de sodium | complément à 100 % |

(Voir Tableaux I et II, pages 6 et 7)

Tableau I

| Réactifs / Exemple | 1ère Etape | | | | | | | | | | neutralisation | 2ème Etape | |
|---|---|---|---|---|---|---|---|---|---|---|---|---|---|
| | Monomères | | | | | | | Eau | BS* | PS* | S* | HC* | S'* |
| | acide acrylique | acrylamide | acide méthacrylique | méthacrylamide | acrylate de méthyle | styrène | acide maléique | | | | | | |
| | g | g | g | g | g | g | g | g | g | ml | g | g | g |
| 1 | 288 | 71 | -- | -- | -- | -- | -- | 560 | 148 | 3,5 | 568 | 684 | 358 |
| 2 | 288 | 71 | -- | -- | -- | -- | -- | 560 | 90 | 3 | 568 | 684 | 360 |
| 3 | 288 | 71 | -- | -- | -- | 3,6 | -- | 600 | 80 | 4 | 568 | 625 | 330 |
| 4 | 216 | 71 | 86 | -- | -- | 3 | -- | 600 | 90 | 3 | 568 | 684 | 360 |
| 5 | 270 | 71 | -- | -- | 21,5 | -- | -- | 580 | 100 | 3 | 533 | 684 | 350 |
| 6 | 270 | 71 | -- | -- | 21,5 | 3 | -- | 580 | 100 | 3 | 533 | 655 | 350 |
| 7 | 216 | 35,5 | 86 | 42,5 | -- | 2 | -- | 600 | 100 | 3,5 | 568 | 600 | 320 |
| 8 | 288 | 71 | -- | -- | -- | 4 | 44 | 580 | 120 | 3,5 | 678 | 684 | 360 |

* BS : solution aqueuse de bisulfite de sodium à 35 % en poids
PS : solution aqueuse de persulfate d'ammonium à 10 % en poids
S : solution aqueuse de soude à 28,1 % en poids
HC : solution d'hypochlorite de sodium à 48° chlorométriques
S' : solution aqueuse de soude à 22 % en poids

Tableau II

| Exemple | Mw | a | b | c | d | e | f | Pouvoir complexant |
|---|---|---|---|---|---|---|---|---|
| 1 | 1070 | 9,4 | 1,83 | 0 | 0 | 0 | 0 | 110 |
| 2 | 2200 | 21,2 | 2,8 | 0,1 | 0 | 0 | 0 | 110 |
| 3 | 2910 | 27,7 | 4,2 | 0,4 | 0 | 0,15 | 0 | 105 |
| 4 | 2130 | 19,3* | 3,5 | 0 | 0 | 0,12 | 0 | 105 |
| 5 | 2000 | 18,1 | 3 | 0,2 | 0,9 | 0 | 0 | 102 |
| 6 | 2000 | 18 | 2,8 | 0,3 | 0,8 | 0,1 | 0 | 100 |
| 7 | 2100 | 17,8xx | 3,1xxx | 0,5xxxx | 0 | 0,07 | 0 | 108 |
| 8 | 1550 | 12 | 2,4 | 0 | 0 | 0,12 | 1,2 | 110 |

* dont 12 sous la forme de motifs acrylate de sodium et 7,3 sous la forme de motifs méthacrylate de sodium
** dont 14 : acrylate de Na, 3,8 : méthacrylate de Na
*** dont 1,5 : vinylamine, 1,6 : méthylvinylamine
**** dont 0,3 : acrylamide, 0,2 : méthacrylamide

Pouvoir anti-redéposition (exemples 9 à 12)

On lave une première fois au moyen d'une poudre décrite ci-dessus un échantillon de tissu éponge en coton blanc ayant un ΔE à l'origine égal à 8,8, en présence d'un échantillon de tissu imprégné d'une salissure donnée dont la nature est précisée au tableau III. A la fin du premier lavage on retire le bain de lavage et l'échantillon de tissu imprégné de la salissure. On renouvelle le bain de lavage et le tissu imprégné du même type de salissure et effectue un second lavage de l'échantillon initial de tissu éponge en coton blanc. On procède de cette façon dix fois successives. A l'issue de 10 lavages on obtient les valeurs de ΔE indiquées dans le tableau III pour le tissu éponge en coton blanc. Dans l'exemple 12, comparatif, on a utilisé, au lieu d'un cotélomère selon l'invention, du tripolyphosphate de sodium.

Tableau III

| Exemple | Cotélomère | | ΔE | | | | |
|---|---|---|---|---|---|---|---|
| | Exemple | % en poids dans la poudre détergente | Noir | Sang | Cacao | Vin | BMI |
| 9 | 1 | 18,5 | 13,8 | 25,7 | 13,3 | 9,3 | 20,1 |
| 10 | 1 | 37 | 8,8 | 8,7 | 8,2 | 7,8 | 8,1 |
| 11 | 2 | 18,5 | 9,9 | 9,8 | 10,4 | 9,2 | 10,4 |
| 12 | TPP | 40 | 9,8 | 11,6 | 9 | 9 | 7,9 |

Pouvoir détergent (exemples 13 à 19)

On lave au moyen d'une poudre détergente décrite ci-dessus simultanément dans le même bain, quatre échantillons de tissus imprégnés des salissures figurant au tableau IV. Chacun des exemples 13 à 19 comprend 3 essais a, b, c indépendants les uns des autres et qui diffèrent par les associations de salissures. On obtient, après un seul lavage, les valeurs de ΔE consignées au tableau IV, à comparer aux valeurs à l'origine du ΔE de chaque tissu imprégné d'une salissure donnée qui figurent en tête du tableau IV, dans la ligne « témoin ».

A titre comparatif l'exemple 19 concerne l'utilisation du tripolyphosphate de sodium (TPP).

Pouvoir détergent en présence d'un tissu-éponge en coton blanc (exemples 20 à 26)

On lave au moyen d'une poudre détergente décrite ci-dessus, simultanément dans le même bain, trois échantillons de tissus imprégnés des salissures figurant au tableau V et un échantillon de tissu-éponge en coton blanc. Chacun des exemples 20 à 26 comprend 3 essais a, b, c indépendants les uns des autres et qui diffèrent par les associations de salissures. On obtient, après un seul lavage, les valeurs des ΔE consignées au tableau V. A titre comparatif l'exemple 26 concerne l'utilisation du tripolyphosphate de sodium (TPP).

Exemples 27 et 28

Les essais décrits dans les exemples 9 à 26 ont tous été effectués à l'aide d'une poudre détergente contenant, en tant qu'agent de blanchiment, 25 % en poids de perborate de sodium cristallisé avec 4 $H_2O$.

Dans l'exemple 27 on remplace totalement cette quantité de perborate de sodium par 10 % en poids d'une composition conforme à la demande de brevet européen n° 5 098 et contenant, en poids, 50 % d'hydroperoxyde de cumènesulfonate de sodium, 40 % de cumènesulfonate de sodium non transformé et 10 % de l'alcool provenant de la décomposition de l'hydroperoxyde. La poudre détergente contient par ailleurs 37 % du cotélomère selon l'exemple 1. Les autres ingrédients sont ceux mentionnés page 6, lignes 32 à 40. Un lavage à l'aide de cette poudre d'un tissu sali par BMI conduit à un E de 36,1.

Dans l'exemple 28, un lavage effectué au moyen d'une poudre contenant 37 % de cotélomère selon l'exemple 1 et 25 % de perborate de sodium conduit à un ΔE de 48,2.

(Voir Tableaux IV et V, pages 9 et 10)

Tableau IV

| Exemple | Cotélomère | | ΔE | | | | | | | | | | | | |
|---|---|---|---|---|---|---|---|---|---|---|---|---|---|---|---|
| | Exemple | % en poids | a) Noir | + Cacao | + Sang | + 101 | b) Noir | + Cacao | + BMI | + 101 | c) Noir | + BMI | + Sang | + Vin |
| Témoin | | | 29,5 | 40 | 57 | 52 | 29,5 | 40 | 59,5 | 52 | 29,5 | 59,5 | 57 | 31 |
| 13 | 1 | 37 | 22,4 | 35,2 | 8,5 | 29,8 | 17 | 15,4 | 27,6 | 26,7 | 21,2 | 43,3 | 9,2 | 7,1 |
| 14 | 1 | 18,5 | 24,7 | 42,8 | 8,5 | 27,4 | 16,8 | 16 | 36,2 | 22,7 | 24,4 | 43,6 | 7,8 | 7,5 |
| 15 | 2 | 21 | 23,2 | 28,5 | 9,1 | 29,3 | 16,8 | 14,1 | 38,3 | 25,6 | 21,9 | 36,8 | 8,3 | 7,4 |
| 16 | 3 | 19 | 26,1 | 15,3 | 17,9 | 31,9 | 24,8 | 14,4 | 39,6 | 30,4 | 25,4 | 40,1 | 16,7 | 7 |
| 17 | 4 | 20 | 32,9 | 41,7 | 10,2 | 30,5 | 26,4 | 14 | 36,6 | 28,7 | 33,6 | 40,6 | 9,9 | 10,5 |
| 18 | 5 | 20 | 26,3 | 16,8 | 12,9 | 34,1 | 25 | 12,6 | 33,7 | 30,4 | 26,8 | 33,6 | 15,8 | 6,7 |
| 19 | TPP | 40 | 22 | 34,1 | 10 | 31,8 | 16,8 | 18,3 | 30,7 | 28,1 | 22,4 | 47,5 | 9,6 | 8,8 |

Tableau V

| Exemple | Cotélomère | | ΔE | | | | | | | | | | | |
|---|---|---|---|---|---|---|---|---|---|---|---|---|---|---|
| | Exemple | % en poids | a) | | | | b) | | | | c) | | | |
| | | | Cacao | + Sang | + 101 | + Coton | Cacao | + BMI | + 101 | + Coton | BMI | + Sang | + Vin | + Coton |
| Témoin | | | 40 | 57 | 52 | 8,8 | 40 | 59,5 | 52 | 8,8 | 59,5 | 57 | 31 | 8,8 |
| 20 | 1 | 37 | 33,2 | 6 | 29,3 | 8,4 | 12,1 | 26,2 | 27,1 | 8,6 | 43,3 | 7,4 | 6,4 | 8,2 |
| 21 | 1 | 18,5 | 29,2 | 6,7 | 27,7 | 8,5 | 14,3 | 35,5 | 22,7 | 8,7 | 42,7 | 6,4 | 6 | 8,7 |
| 22 | 2 | 21 | 25,6 | 6,6 | 28,1 | 8,9 | 12,2 | 34,3 | 25,5 | 8,5 | 43 | 7,3 | 6,5 | 8,1 |
| 23 | 3 | 19 | 12,9 | 13,3 | 28,3 | 8,8 | 15,1 | 39,3 | 29,9 | 9 | 41,6 | 16,2 | 5,8 | 8,4 |
| 24 | 4 | 20 | 42,7 | 8,7 | 30,4 | 8,3 | 14,7 | 37,3 | 27,7 | 7,7 | 40 | 8,6 | 12,2 | 8,1 |
| 25 | 5 | 20 | 13,2 | 12,1 | 29,3 | 8,7 | 11,1 | 35,2 | 30,2 | 8,3 | 36,1 | 14,3 | 5,8 | 8,6 |
| 26 | TPP | 40 | 36,8 | 7,9 | 31,9 | 9,3 | 17,2 | 26,9 | 28,3 | 9 | 46,2 | 10,1 | 10,1 | 8,3 |

**Revendications**

1. Cotélomères hydrophiles à terminaison sulfonate caractérisés en ce qu'ils ont pour formule générale :

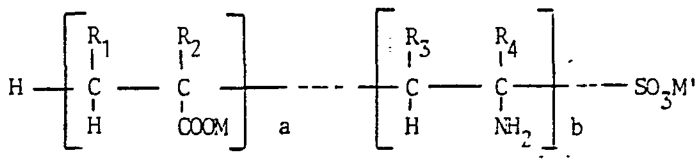

dans laquelle $R_1$, $R_2$, $R_3$ et $R_4$, qui sont identiques ou différents, représentent des atomes d'hydrogène ou bien des groupes alkyles ayant de 1 à 4 atomes de carbone, M est l'hydrogène ou un métal alcalin, M' est un métal alcalin, $8 \leq a \leq 40$ et $1 \leq b \leq 20$.

2. Cotélomères selon la revendication 1, caractérisés en ce qu'ils contiennent, en outre, des motifs

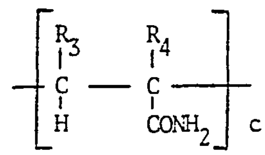

dans lesquels $R_3$ et $R_4$, identiques ou différents, représentent des atomes d'hydrogène ou des groupes alkyles ayant de 1 à 4 atomes de carbone, et $0 < c \leq 2$.

3. Cotélomères selon l'une des revendications 1 et 2 caractérisés en ce qu'ils contiennent, en outre, des motifs

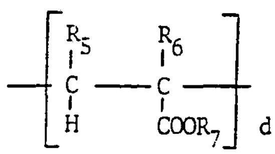

dans lesquels $R_5$ et $R_6$, identiques ou différents, représentent des atomes d'hydrogène ou des groupes alkyles ayant de 1 à 4 atomes de carbone, $R_7$ représente un groupe alkyle ayant de 1 à 8 atomes de carbone, et $0 < d \leq 3$.

4. Cotélomères selon l'une des revendications 1 à 3 caractérisés en ce qu'ils contiennent, en outre, des motifs

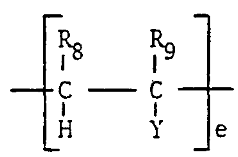

dans lesquels $R_8$ et $R_9$, identiques ou différents, représentent des atomes d'hydrogène ou des groupes alkyles ayant 1 ou 2 atomes de carbone, Y représente un groupe aryle tel que phényle, phényle substitué, naphtyle, et $0 < e \leq 2$.

5. Cotélomères selon l'une des revendications 1 à 4 caractérisés en ce qu'ils contiennent, en outre, des motifs

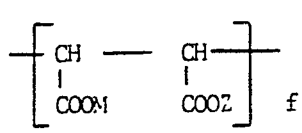

dans lesquels M représente l'hydrogène ou un métal alcalin, Z représente M ou bien un groupe alkyle contenant de 1 à 8 atomes de carbone, et $0 < f \leq 10$.

6. Cotélomères selon l'une des revendications 1 à 5 caractérisés en ce qu'ils se présentent sous la forme d'un mélange avec du carbonate de sodium et du chlorure de sodium.

7. Composition détergente comprenant un agent de blanchiment, au moins un surfactif, du silicate de sodium, et le cas échéant, du sulfate de sodium et/ou du carbonate de sodium, caractérisée en ce qu'elle comprend, en outre, de 10 à 50 % en poids d'un cotélomère hydrophile selon l'une des revendications 1 à 6.

8. Composition détergente selon la revendication 7 caractérisée en ce qu'elle comprend, en tant

qu'agent de blanchiment, de 1 à 30 % en poids d'une composition d'hydroperoxyde de mono- ou polyalkylarylsulfonate de métal alcalin.

9. Composition détergente selon la revendication 8 caractérisée en ce que la composition d'hydroperoxyde de mono- ou polyalkylarylsulfonate de métal alcalin a été préalablement traitée par de l'eau oxygénée.

**Claims**

1. Hydrophilic cotelomers having a terminal sulphonate group, characterised in that they have the general formula :

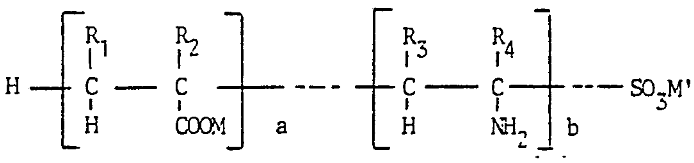

in which $R_1$, $R_2$, $R_3$ and $R_4$, which are identical or different, represent hydrogen atoms or alkyl groups having from 1 to 4 carbon atoms, M is hydrogen or an alkali metal, M' is an alkali metal, $8 \leq a \leq 40$ and $1 \leq b \leq 20$.

2. Cotelomers according to claim 1, characterised in that they contain, in addition,

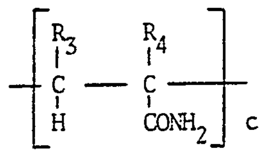

structural units, in which $R_3$ and $R_4$, identical or different, represent hydrogen atoms or alkyl groups having from 1 to 4 carbon atoms and $0 < c \leq 2$.

3. Cotelomers according to one of claims 1 and 2, characterised in that they contain, in addition,

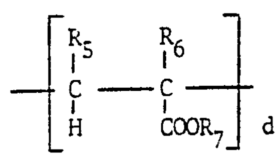

structural units, in which $R_5$ and $R_6$, identical or different, represent hydrogen atoms or alkyl groups having from 1 to 4 carbon atoms, $R_7$ represents an alkyl group having from 1 to 8 carbon atoms and $0 < d \leq 3$.

4. Cotelomers according to one of the claims 1 to 3, characterised in that they contain, in addition,

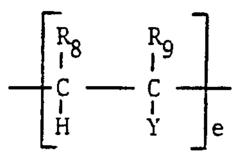

structural units, in which $R_8$ and $R_9$, identical or different, represent hydrogen atoms or alkyl groups having 1 or 2 carbon atoms, Y represents an aryl group, such as phenyl, substituted phenyl and naphtyl, and $0 < e \leq 2$.

5. Cotelomers according to one of the claims 1 to 4, characterised in that they contain, in addition,

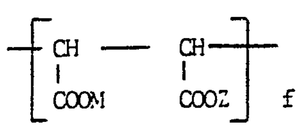

structural units, in which M represents hydrogen or an alkali metal, Z represents M or an alkyl group containing from 1 to 8 carbon atoms and $0 < f \leq 10$.

6. Cotelomers according to one of the claims 1 to 5, characterised in that they are in the form of a mixture with sodium carbonate and sodium chloride.

7. Detergent composition comprising a bleaching agent, at least one surfactant, sodium silicate and, optionally, sodium sulphate and/or sodium carbonate, characterised in that it comprises, in addition, from 10 to 50 % by weight of a hydrophilic cotelomer according to one of the claims 1 to 6.

8. Detergent composition according to claim 7, characterised in that it comprises as bleaching agent from 1 to 30 % by weight of an alkali metal mono- or polyalkylarylsulphonate hydroperoxide composition.

9. Detergent composition according to claim 8, characterised in that the alkali metal mono- or polyalkylarylsulphonate hydroperoxide composition has been previously treated with hydrogen peroxide.

## Ansprüche

1. Hydrophile Cotelomere mit Sulfonatendgruppen, dadurch gekennzeichnet, daß sie die allgemeine Formel aufweisen :

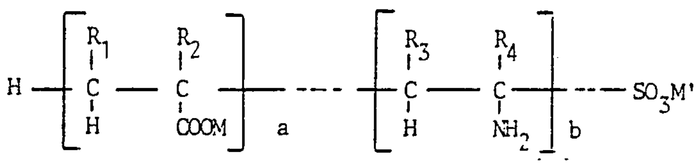

worin $R_1$, $R_2$, $R_3$ und $R_4$, welche identisch oder verschieden sind, Wasserstoffatome oder auch Alkylgruppen mit 1 bis 4 Kohlenstoffatomen, M Wasserstoff oder ein Alkalimetall und M' ein Alkalimetall bedeuten, $8 \leq a \leq 40$ und $1 \leq b \leq 20$.

2. Cotelomere nach Anspruch 1, dadurch gekennzeichnet, daß sie weiters Einheiten

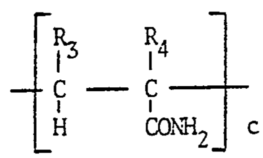

enthalten, in denen $R_3$ und $R_4$, die identisch oder verschieden sind, Wasserstoffatome oder Alkylgruppen mit 1 bis 4 Kohlenstoffatomen darstellen und $0 < c \leq 2$.

3. Cotelomere nach Anspruch 1 oder 2, dadurch gekennzeichnet, daß sie weiters Einheiten

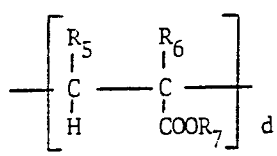

enthalten, in denen $R_5$ und $R_6$, die identisch oder verschieden sind, Wasserstoffatome oder Alkylgruppen mit 1 bis 4 Kohlenstoffatomen und $R_7$ eine Alkylgruppe mit 1 bis 8 Kohlenstoffatomen darstellen und $0 < d \leq 3$.

4. Cotelomere nach einem der Ansprüche 1 bis 3, dadurch gekennzeichnet, daß sie weiters Einheiten

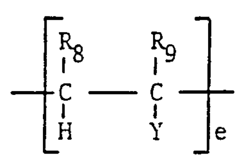

enthalten, in denen $R_8$ und $R_9$, die identisch oder verschieden sind, Wasserstoffatome oder Alkylgruppen mit 1 oder 2 Kohlenstoffatomen und Y eine Arylgruppe wie Phenyl, substituiertes Phenyl oder Naphthyl darstellen und $0 < e \leq 2$.

5. Cotelomere nach einem der Ansprüche 1 bis 4, dadurch gekennzeichnet, daß sie weiters Einheiten

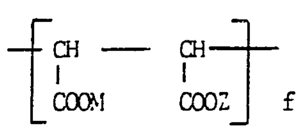

enthalten, in denen M Wasserstoff oder ein Alkalimetall bedeutet und Z für M oder auch eine Alkylgruppe mit 1 bis 8 Kohlenstoffatomen steht und $0 < f \leq 10$.

6. Cotelomere nach einem der Ansprüche 1 bis 5, dadurch gekennzeichnet, daß sie in Form einer Mischung mit Natriumcarbonat und Natriumchlorid vorliegen.

7. Waschmittelzusammensetzung enthaltend ein Bleichmittel, wenigstens ein Netzmittel, Natriumsilikat und gegebenenfalls Natriumsulfat und/oder Natriumcarbonat, dadurch gekennzeichnet, daß sie weiters 10 bis 50 Gew.-% eines hydrophilen Cotelomers nach einem der Ansprüche 1 bis 6 enthält.

8. Waschmittelzusammensetzung nach Anspruch 7, dadurch gekennzeichnet, daß sie als Bleichmittel 1 bis 30 Gew.-% eines Hydroperoxids eines Alkalimetallmono- oder -polyalkylarylsulfonats enthält.

9. Waschmittelzusammensetzung nach Anspruch 8, dadurch gekennzeichnet, daß das Hydroperoxid des Alkalimetallmono- oder -polyalkylarylsulfonats vorher mit Perhydrol behandelt worden ist.